# EUROPÄISCHE PATENTSCHRIFT

(11) **EP 2 013 073 B1**
(45) Veröffentlichungstag und Bekanntmachung des Hinweises auf die Patenterteilung: **11.11.2009**
(21) Anmeldenummer: 07724607.2
(22) Anmeldetag: 26.04.2007
(51) Int. Cl.: B62D 35/00, B60Q 1/00, B62D 37/02

(54) **KRAFTWAGENHECK SOWIE ZUGEHÖRIGE HECKLEUCHTE**
MOTOR VEHICLE REAR END AND ASSOCIATED REAR LIGHT
ARRIERE D'UN VEHICULE AUTOMOBILE ET FEUX ARRIERE ASSOCIES

(30) Priorität: 28.04.2006 DE 102006019777
(43) Veröffentlichungstag der Anmeldung: 14.01.2009
(73) Patentinhaber: Daimler AG, 70327 Stuttgart (DE)
(72) Erfinder: DANNHÄUSER, Peter, 72622 Nürtingen (DE); KONERMANN, Martin, 70619 Stuttgart (DE)
(74) Vertreter: JENSEN & SON
(86) Internationale Anmeldenummer: PCT/EP2007/003677
(87) Internationale Veröffentlichungsnummer: WO 2007/124912

(56) Entgegenhaltungen:
- EP-A- 1 506 911
- DE-A1- 10 233 041
- FR-A1- 2 859 160
- US-A- 4 838 603

## Beschreibung

Die Erfindung betrifft ein Kraftwagenheck gemäß dem Oberbegriff des Patentanspruches 1 sowie eine zugeordnete Heckleuchte gemäß dem Oberbegriff des nebengeordneten Patentanspruches 7.

Aus der DE 102 33 041 A1 ist ein derartiges Kraftwagenheck mit integrierten Heckleuchten bekannt. Dieses Kraftwagenheck weist eine sich am Heckdeckel in Breitenrichtung des Kraftwagenhecks erstreckende Luftabrisskante auf. Die Luftabrisskante wird durch einen kantigen Übergangsbereich des Heckdeckels zwischen seinem horizontalen Längenabschnitt und seinen nach unten abgewinkelten Abschnitt gebildet. Um auch in den Seitenwandbereichen des Kraftwagenhecks einen gezielten Strömungsabriss sicherzustellen, ist auf beiden Heckseiten in unmittelbarer Verlängerung der Luftabrisskante eine längliche Luftausströmöffnung vorgesehen. Die Luftausströmöffnung befindet sich am Ende eines Luftkanals im Spalt zwischen dem Umfang des Leuchtengehäuses und der angrenzenden Außenkontur der Karosserie. Um das Druckgefälle am Fahrzeugheck für die Luftausblasung an den Luftausströmöffnungen nutzen zu können, ist die Luftausströmöffnung über den Luftkanal fluidisch mit Lufteinströmöffnungen verbunden, an denen bei der Fahrt des Fahrzeugs ein höherer Druck herrscht. Eine dieser Lufteinströmöffnungen ist im Spalt zwischen der Unterseite des Leuchtengehäuses und der angrenzenden Außenkontur der Karosserie angeordnet. Eine zusätzliche Lufteinströmöffnung kann unterhalb der Stoßfängerverkleidung vorgesehen sein. Der Luftkanal verläuft innerhalb des Kraftwagenhecks in Höhenrichtung und im oberen Bereich um die Umfangskontur des Leuchtengehäuses herum. Da bei der Einpassung der Heckleuchten in ihre Karosserieausnehmung Rohbautoleranzen ausgeglichen werden müssen, ergibt sich je nach Toleranzlage ein unterschiedliches Spaltmaß für die Luftein- bzw. Luftausströmöffnung. Der Spaltbereich am Umfang des Leuchtengehäuses zwischen der Luftein- bzw. Luftausströmöffnung ist durch eine Gummiprofildichtung geschlossen. Als nachteilig kann dabei der Umstand angesehen werden, dass die Querschnitte der Luftein- und Luftausströmöffnung in Abhängigkeit von der Toleranzlage differieren, wodurch der Luftdurchsatz über das vorgesehene konstruktive Maß hinaus schwanken kann. Bei zu engen Querschnitten können auch störende Pfeifgeräusche auftreten.

Aus dem Serienfahrzeugbau ist bei den Limousinen der aktuellen Baureihe 5 von BMW ein Kraftwagenheck bekannt, bei dem neben einem definierten Strömungsabriss am Heckdeckel durch eine Luftabrisskante auch in den Seitenwandbereichen des sich nach hinten verjüngenden Kraftwagenhecks ein definierter Strömungsabriss sichergestellt werden soll. Dazu ist in die Abdeckscheiben der in das Fahrzeugheck integrierten Heckleuchten jeweils ein Spoiler integriert, der sich als erhabene Ausbuchtung über einen unteren Höhenbereich der Heckleuchte erstreckt. Die Abrisskante des Spoilers verläuft - unter leichter Neigung nach vorne - annähernd gerade. Die erhabene Ausbuchtung der Heckleuchten kann jedoch zum Beispiel aus stilistischen Gründen als störend empfunden werden. Auch kann die Reinigung der Heckleuchten durch ihre Ausbuchtung erschwert sein.

Die US 4,838,603 zeigt Anordnungen, mit denen eine Schmutzablagerung auf den Abdeckscheiben von in das Fahrzeugheck integrierten Heckleuchten verhindert werden soll. Dazu sind an der Heckleuchte bzw. am Fahrzeugheck Luftkanäle angeordnet, die an Seitenwandteilen des Fahrzeughecks angeordnete Lufteinlässe aufweisen, die jeweils mit einer in der Seitenwand angeordneten Vertiefung, deren Querschnitt in Richtung zum Heck zunimmt, kommunizieren. Die Luftkanäle führen zu Luftauslässen an in die Rückseite des Fahrzeughecks integrierten Teilen der Abdeckscheiben der Heckleuchten. Ein Zusammenhang mit dem Abriss der bei der Fahrt des Fahrzeuges mit dem Fahrtwind einhergehenden Luftumströmung des Kraftwagens ist nicht erkennbar.

Aufgabe der Erfindung ist es, ein Kraftwagenheck gemäß dem Oberbegriff des Patentanspruches 1 dahingehend zu verbessern, dass die konstruktive Freizügigkeit bei der Gestaltung der Seitenwandbereiche des Kraftwagenhecks auch im Hinblick auf eine leichte Reinigungsmöglichkeit vergrößert ist.

Diese Aufgabe wird durch die kennzeichnenden Merkmale des Anspruches 1 gelöst.

Obwohl die in den Seitenwandbereichen angeordneten Luftaustrittsöffnungen jeweils einen seitlichen Abstand zur Luftabrisskante des Heckdeckels aufweisen und in einem horizontalen Abstand vor der hinteren Stirnwand liegen, wird die Fahrtwindüberströmung der Seitenwand durch den aus den Luftaustrittsöffnungen austretenden Luftstrom zuverlässig abgelöst. Die in die Seitenwandbereiche integrierten Luftaustrittsöffnungen können flächenbündig angeordnet und glattflächig ausgebildet sein, so dass eine leichte Reinigung der Seitenwandbereiche möglich wird.

Gemäß einer besonders bevorzugten Ausführungsform der Erfindung sind die Luftaustrittsöffnungen innerhalb von in die Seitenwandbereiche integrierten Teilen von Abdeckscheiben der Heckleuchten angeordnet, d.h. die in den Abdeckscheiben der Heckleuchten angeordneten Luftaustrittsöffnungen kommunizieren bei Einbau der Heckleuchten am Heck mit den im Heck angeordneten Luftkanälen. Dies bietet den Vorteil, dass eine besonders glattflächige Ausgestaltung der Außenkontur des Hecks ermöglicht wird. Darüber hinaus besitzen die Luftaustrittsöffnungen entsprechend der hohen Präzision, mit der die Heckleuchten und insbesondere deren Abdeckscheiben regelmäßig hergestellt werden, einen sehr maßhaltigen Öffnungsquerschnitt.

Um die Wandstärke der Abdeckscheiben bei Aufrechterhaltung der notwendigen Stabilität reduzieren zu können, bilden die in der Abdeckscheibe angeordneten Luftaustrittsöffnungen eine Lochreihe, so dass zwischen den Öffnungen Verbindungsstege der Abdeckscheibe erhalten bleiben. Vorzugsweise ist ein etwa C-förmiges Lochbild mit in Rückwärtsrichtung des Fahrzeuges geöffneter C-Öffnung vorgesehen. Damit kann die Ablösung der Seitenwandumströmung über die gesamte Höhe der Lochreihe realisiert werden

Wenn in die Seitenwandbereiche integrierte Teile der Abdeckscheiben der Heckleuchten einen etwa halbkreisförmig gekrümmten vorderen Rand aufweisen, lässt sich sehr gut ein Lochbild aussparen, welches an einen C-förmigen Randstreifen der Abdeckscheibe angepasst ist. Die Aussparungen des Lochbildes sind dabei so in den Randstreifen eingebracht, dass die Lichtfunktion der Abdeckscheibe nicht beeinträchtigt wird.

Damit keine zusätzliche Energie zur Speisung der Luftkanäle benötigt wird, wird vorteilhaft das von der Fahrgeschwindigkeit abhängige Druckgefälle am Kraftwagenheck genutzt.

Um bei Luftaustritt im Seitenwandbereich der über Eck integrierten Heckleuchte einen kurzen Luftkanal zu ermöglichen, liegt eine Lufteinströmöffnung vorzugsweise in einem Spalt zwischen Heckdeckel und Heckleuchte. Alternativ oder zusätzlich kann eine Lufteintrittsöffnung unterhalb der Stoßfängerverkleidung vorgesehen werden, um eine durch die Stoßfängerverkleidung verdeckte Anordnung vorzusehen.

Nachfolgend wird ein Ausführungsbeispiel der Erfindung anhand einer zeichnerischen Darstellung näher erläutert.

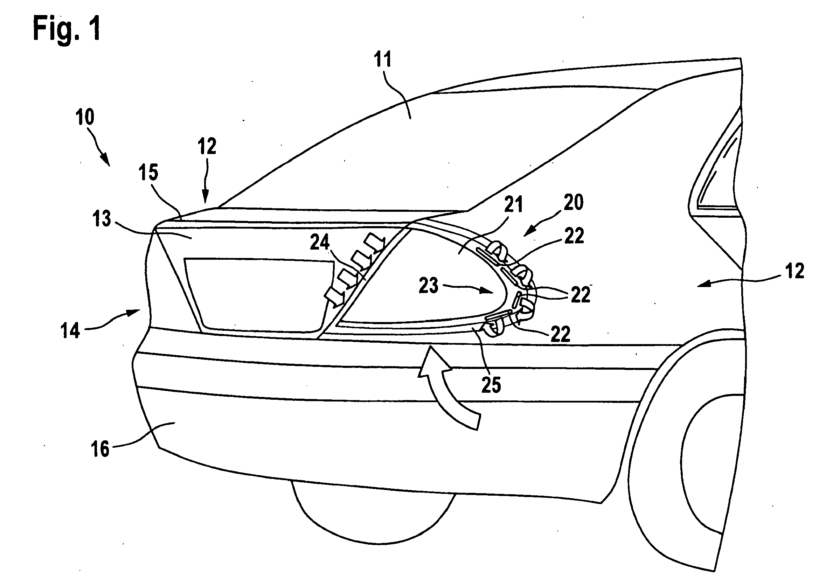

Die einzige Figur der Darstellung zeigt eine perspektivische Ansicht eines Kraftwagenhecks schräg von hinten rechts.

Ein Kraftwagenheck 10 eines nicht in seiner Gesamtheit gezeigten Kraftwagens ist als Fließheck beziehungsweise Stufenheck mit einer schrägen Heckscheibe 11 ausgebildet, wobei sich das Kraftwagenheck aerodynamisch nach hinten verjüngt. Das Kraftwagenheck 10 wird von zwei Seitenwandbereichen 12 begrenzt, die einen Heckdeckel 13 und eine hintere Stirnwand 14 seitlich einschließen. Der über seine Länge abgewinkelte Heckdeckel 13 weist eine Luftabrisskante 15 auf, die durch einen kantigen Übergangsbereich zwischen seinem horizontalen Längenabschnitt und seinem nach unten abgewinkelten Abschnitt gebildet wird. Das Kraftwagenheck 10 weist unter spiegelsymmetrischer Anordnung beidseitig jeweils eine Heckleuchte 20 auf, die seitlich an den nach unten abgewinkelten Abschnitt des Heckdeckels 13 anschließt und um die zugeordnete hintere Ecke des Kraftwagenhecks 10 herum in den Seitenwandbereich 12 des Kraftwagenhecks 10 hineingeführt ist. Unterhalb der Heckleuchten 20 und des Heckdeckels 13 weist das Kraftwagenheck 10 eine Stoßfängerverkleidung 16 auf, die an der Karosserie des Kraftwagens befestigt ist und den unteren Teil der Stirnwand 14 überdeckt.

Im Fahrbetrieb des Kraftwagens bildet sich eine Luftumströmung des Kraftwagens durch den Fahrtwind aus. Um neben dem definierten Strömungsabriss am Heckdeckel 13 durch die horizontale Luftabrisskante 15 auch im Seitenwandbereich 12 einen gezielten Strömungsabriss zu erreichen, sind in einen vorderen Flächenbereich einer als Abdeckelement 21 ausgebildeten Abdeckscheibe der Heckleuchte 20 schlitzförmige Öffnungen 22 eingebracht. Diese Öffnungen 22 sind trotz unterschiedlicher Länge mit einem einzigen Bezugszeichen versehen, um die Beschreibung zu vereinfachen. Die Öffnungen 22 bilden ein C-förmiges Lochbild 23, das an die vordere Umfangskontur der Abdeckscheibe 21 angepasst ist. Die Öffnungen 22 sind als Luftaustrittsöffnungen ausgebildet und bilden das Ende eines nicht dargestellten Luftkanals. Der Luftkanals verläuft innerhalb des Kraftwagenhecks horizontal um die Umfangskontur des Heckleuchtengehäuses herum. Dabei strömt ein Luftstrom in einen als Lufteintrittsöffnung 24 ausgebildeten Spalt zwischen dem nach unten abgewinkelten Abschnitt des Heckdeckels 13 und der angrenzenden Heckleuchte 20 in den Luftkanal ein. Der restliche Spaltbereich zwischen dem Umfang des Leuchtengehäuses und der Karosserie ist durch eine Dichtung 25 geschlossen. Ein alternativer oder zusätzlicher Luftkanal mit einer Lufteintrittsöffnung kann unterhalb der Stoßfängerverkleidung vorgesehen sein. Dieser zusätzliche Luftkanal verläuft in Fahrzeughöhenrichtung innerhalb des Kraftwagens zwischen der Stoßfängerverkleidung und der Karosserie, ähnlich wie es aus der DE 102 33 041 A1 vorbekannt ist.

Im Fahrbetrieb bildet sich aufgrund der Umströmung des Kraftwagens im Bereich des Kraftwagenhecks 10 eine unterschiedliche Druckverteilung aus. Die Lufteintrittsöffnungen 24 und die Öffnungen 22 sind so positioniert, dass im Fahrbetrieb an der Lufteintrittsöffnung 24 beziehungsweise jeder weiteren Lufteintrittsöffnung des Luftkanals ein höherer Luftdruck herrscht als im Bereich der Öffnungen 22. Demzufolge kommt es im Fahrbetrieb zu einer geschwindigkeitsabhängigen Luftströmung von den Lufteintrittsöffnungen zu den Öffnungen 22.

Der alternative oder zusätzliche Luftstrom durch die Lufteintrittsöffnung, der entlang der Vorderseite der Stoßfängerverkleidung 16 im Luftkanal nach oben geführt und den Luftaustrittsöffnungen 22 zugeleitet wird, ist durch einen dicken Pfeil angedeutet.

Die Lufteinströmung an der Lufteintrittsöffnung 24 erfolgt über die Spaltlänge dieser Eintrittsöffnung 24, wie durch mehrere gerade Pfeile gleicher Länge angedeutet ist.

Der Luftkanalabschnitt, durch den die Luft von der Lufteintrittsöffnung 24 aus eingeströmt ist, verläuft innenseitig zwischen Leuchtengehäuse und Karosserie in einer Vertiefung, wodurch ein sehr kurzer Strömungsweg zu den seitlichen Öffnungen 22 gewährleistet werden kann. In diesem Bereich mündet auch der Kanalabschnitt mit der Lufteintrittsöffnung ein, durch den die Luft von der Schürze der Stoßfängerverkleidung 16 aus alternativ oder zusätzlich nach oben strömt.

Die zur Strömungsablösung der Seitenwandströmung aus den schlitzförmigen Öffnungen 22 austretende Luft ist durch nach hinten gekrümmte Pfeile angedeutet.

## Patentansprüche

1. Kraftwagenheck, insbesondere eines Personenwagens,
welches sich nach hinten verjüngt und von einer hinteren Stirnwand (14) und einem Heckdeckel (13) begrenzt ist, mit sich am Heckdeckel in Querrichtung des Kraftwagens erstreckender Luftabrisskante (15) und mit in das Kraftwagenheck integrierten Heckleuchten (20) sowie im Inneren des Hecks angeordneten Luftkanälen, welche an heckseitige Luftaustrittsöffnungen (22) anschließen, die so angeordnet sind, dass im Fahrbetrieb über die Luftkanäle zu den Luftaustrittsöffnungen (22) geführte und dort austretende Luftströme zur Ablösung von Luftwirbeln am Heck führen bzw. beitragen,
**dadurch gekennzeichnet,**
**dass** die Luftaustrittsöffnungen (22) in Seitenwandbereichen (12) des Hecks mit horizontalem Abstand von der hinteren Stirnwand (14) und vertikalem Abstand unterhalb der Luftabrisskante (15), über den Höhenbereich der Heckleuchten (20) erstreckt, angeordnet sind.

2. Kraftwagenheck nach Anspruch 1,
**dadurch gekennzeichnet,**
**dass** die Luftaustrittsöffnungen (22) in in die Seitenwandbereiche (12) integrierten Teilen von Abdeckscheiben der Heckleuchten (20) angeordnet sind.

3. Kraftwagenheck nach Anspruch 2,
**dadurch gekennzeichnet,**
**dass** die Luftaustrittsöffnungen (22) jeweils in einem vorderen Randstreifen der Abdeckscheiben angeordnet sind.

4. Kraftwagenheck nach Anspruch 1 oder 2,
**dadurch gekennzeichnet,**
**dass** die Luftaustrittsöffnungen über die Luftkanäle mit mindestens einer Lufteintrittsöffnung (24) kommunizieren, die von einem fahrgeschwindigkeitsabhängigen Überdruckgebiet am Kraftwagenheck mit Luft gespeist wird.

5. Kraftwagenheck nach Anspruch 4,
**dadurch gekennzeichnet,**
**dass** mindestens eine Lufteintrittsöffnung (24) der Luftkanäle von einem Spalt seitlich neben dem Heckdeckel (13) gebildet ist.

6. Kraftwagenheck nach einem der Ansprüche 4 und 5,
**dadurch gekennzeichnet,**
**dass** mindestens eine Lufteintrittsöffnung der Luftkanäle unterhalb einer Stoßfängerverkleidung (16) gebildet ist.

7. Heckleuchte für ein Kraftwagenheck, insbesondere eines Personenwagens, welches sich nach hinten verjüngt und eine hintere Stirnwand (14) sowie einen Heckdeckel (13) mit sich am Heckdeckel (13) in Querrichtung des Kraftwagens erstreckender Luftabrisskante (15) und seitliche, in das Kraftwagenheck integrierte Heckleuchten (20) sowie im Innern des Hecks angeordnete Luftkanäle aufweist, welche an heckseitige Luftaustrittsöffnungen (22) anschließen, die so angeordnet sind, dass im Fahrbetrieb über die Luftkanäle zu den Luftaustrittsöffnungen (22) geführte und dort austretende Luftströme zur Ablösung von Luftwirbeln am Heck führen bzw. beitragen,
**gekennzeichnet**
**durch** eine Abdeckscheibe, die bei Montage der Heckleuchte am Fahrzeug mit einem Teilbereich in einen Seitenwandbereich des Fahrzeughecks integriert ist und in diesem Teilbereich angeordnete Öffnungen (22) aufweist, die bei Montage der Heckleuchte am Fahrzeugheck mit luftaustrittsseitigen Enden von Luftkanälen kommunizieren.

8. Heckleuchte nach Anspruch 7,
**dadurch gekennzeichnet,**
**dass** die Öffnungen (22) in einem sich über die Höhe der Abdeckscheibe erstreckenden, in Einbaulage der Heckleuchten vorderen Randstreifen angeordnet sind.

9. Heckleuchte nach Anspruch 7 oder 8,
**dadurch gekennzeichnet,**
**dass** der bei Montage der Heckleuchte am Fahrzeug in einem Seitenwandbereich des Fahrzeughecks integrierte Teilbereich der Abdeckscheibe einen halbkreisförmigen vorderen Randbereich aufweist, und dass die Luftaustrittsöffnungen ein C-förmiges Lochbild haben.

## Claims

1. Motor vehicle rear end, in particular of a car, which tapers towards the rear and is bounded by a rear end wall (14) and a boot lid (13), with an air separation edge (15) extending on the boot lid in the transverse direction of the motor vehicle, with rear lights (20) integrated into the motor vehicle rear end and with air ducts located in the rear end and joined to rear-end air outlets (22) arranged such that air flows passed via the air ducts to the air outlets (22)and discharged there while travelling cause or contribute to the separation of air vortices at the rear end,
**characterised in that**
the air outlets (22) are located in side wall regions (12) of the rear end at a horizontal distance from the rear end wall (14) and a vertical distance below the air separation edge (15), extending over the height of the rear lights (20).

2. Motor vehicle rear end according to claim 1,
**characterised in that**
the air outlets (22) are located in parts of lenses of the rear lights (20) which are integrated into the side wall regions (12).

3. Motor vehicle rear end according to claim 2,
**characterised in that**
each of the air outlets (22) is located in a front edge strip of the lenses.

4. Motor vehicle rear end according to claim 1 or 2,
**characterised in that**
the air outlets communicate via the air ducts with at least one air inlet (24) supplied with air by a vehicle speed-dependent excess pressure region on the motor vehicle rear end.

5. Motor vehicle rear end according to claim 4,
**characterised in that**
at least one air inlet (24) of the air ducts is represented by a gap at the side of the boot lid (13).

6. Motor vehicle rear end according to claim 4 or 5,
**characterised in that**
at least one air inlet of the air ducts is provided below a bumper cover (16).

7. Rear light for a motor vehicle rear end, in particular of a car, which tapers towards the rear and comprises a rear end wall (14) and a boot lid (13), an air separation edge (15) extending on the boot lid in the transverse direction of the motor vehicle and lateral rear lights (20) integrated into the motor vehicle rear end and air ducts located in the rear end and joined to rear-end air outlets (22) arranged such that air flows passed via the air ducts to the air outlets (22) and discharged there while travelling cause or contribute to the separation of air vortices at the rear end,
**characterised**
**by** a lens which is integrated with a sub-section in a side wall region of the vehicle rear end when the rear light is fitted to the vehicle and which has openings (22) in said sub-section which communicate with air outlet-side ends of air ducts when the rear light is fitted to the vehicle rear end.

8. Rear light according to claim 7,
**characterised in that**
the openings (22) are located in an edge strip which is in front in the installed position of the rear lights and which extends over the height of the lens.

9. Rear light according to claim 7 or 8,
**characterised in that**
the sub-section of the lens which is integrated with a side wall region of the vehicle rear end when the rear light is fitted to the vehicle has a semicircular front edge region, and **in that** the air outlets have a C-shaped hole pattern.

## Revendications

1. Arrière d'un véhicule, notamment d'une voiture particulière, qui s'amincit vers l'arrière et est limité par une face arrière (14) et un capot arrière (13), avec un bord de rupture d'air (15) s'étendant dans la direction transversale du véhicule automobile sur le capot arrière, et avec des feux arrière (20) qui sont intégrés dans l'arrière du véhicule ainsi que des canaux d'air disposés à l'arrière qui sont connectés à des ouvertures de sortie d'air (22) lesquelles sont disposées de manière telle qu'en mode de fonctionnement les flux d'air sortant et guidés dans les canaux d'air vers les ouvertures de sortie d'air conduisent ou contribuent à décoller les tourbillons d'air à l'arrière **caractérisé en ce que** les ouvertures de sortie d'air (22) disposées dans la région des parois latérales (12) à l'arrière à une distance horizontale de la face arrière (14) et à une distance verticale sous le bord de rupture d'air (15), s'étendent sur la plage de hauteur des feux arrière (20).

2. Arrière d'un véhicule selon la revendication 1, **caractérisé en ce que** les ouvertures de sortie d'air (22) sont disposées dans des parties de plaques de recouvrement des feux arrière (20) qui sont intégrées dans les régions des parois latérales (12).

3. Arrière d'un véhicule selon la revendication 2, **caractérisé en ce que** chacune des ouvertures de sortie d'air (22) est disposée dans une bordure avant des plaques de recouvrement.

4. Arrière d'un véhicule automobile selon la revendication 1 ou 2, **caractérisé en ce que** les ouvertures de sortie d'air communiquent avec au moins une ouverture d'entrée d'air (24) par les canaux d'air qui est alimentée en air par une région de surpression dépendant de la vitesse du véhicule sur l'arrière du véhicule.

5. Arrière d'un véhicule selon la revendication 4, **caractérisé en ce qu'**au moins une ouverture d'entrée d'air (24) des canaux d'air est formée par une fente disposée latéralement à proximité du capot arrière (13).

6. Arrière d'un véhicule selon l'une quelconque des revendications 4 et 5, **caractérisé en ce qu'**au moins une ouverture d'entrée d'air des canaux d'air est formée sous un revêtement de pare-chocs (16).

7. Feu arrière pour l'arrière d'un véhicule, en particulier d'une voiture particulière, qui s'amincit vers l'arrière et présente une face arrière (14) ainsi qu'un capot arrière (13) avec un bord de rupture d'air (15), s'étend dans la direction transversale du véhicule automobile sur le capot arrière (13), et des feux arrière latéraux (20) intégrés à l'arrière du véhicule ainsi que des canaux d'air disposés à l'arrière, lesquels sont connectés à des ouvertures de sortie d'air (22) arrière, qui sont disposées de telle sorte qu'en mode de fonctionnement les flux d'air sortant et guidés par les canaux d'air vers les ouvertures de sortie d'air (22) conduisent ou contribuent à décoller les tourbillons d'air sur l'arrière, **caractérisé par** une plaque de recouvrement qui est intégrée - lors du montage du feu arrière sur le véhicule - avec une zone partielle dans une région de paroi latérale de l'arrière du véhicule et présente dans cette zone partielle des ouvertures (22) qui communiquent lors du montage du feu arrière sur l'arrière du véhicule avec des extrémités disposées côté sortie d'air des canaux d'air.

8. Feu arrière selon la revendication 7, **caractérisé en ce que** les ouvertures (22) sont disposées dans une bordure avant s'étendant sur la hauteur de la plaque de recouvrement, en position de montage des feux arrière.

9. Feu arrière selon la revendication 7 ou 8, **caractérisé en ce que** la région partielle intégrée de la plaque de recouvrement dans une zone de paroi latérale de l'arrière du véhicule lors du montage du feu arrière sur le véhicule présente une zone de bordure avant demi-circulaire, et **en ce que** les ouvertures de sortie d'air ont une configuration de perçage en forme de C.
